# EUROPÄISCHE PATENTSCHRIFT

(11) **EP 2 062 068 B1**
(45) Veröffentlichungstag und Bekanntmachung des Hinweises auf die Patenterteilung: **04.12.2013**
(21) Anmeldenummer: 07801676.3
(22) Anmeldetag: 16.08.2007
(51) Int. Cl.: G01S 13/42, G01S 13/93

(54) **VERFAHREN ZUM BETREIBEN EINES KRAFTFAHRZEUG-RADARSYSTEMS UND KRAFTFAHRZEUG-RADARSYSTEM**
METHOD FOR OPERATING A MOTOR VEHICLE RADAR SYSTEM AND MOTOR VEHICLE RADAR SYSTEM
PROCÉDÉ DE FONCTIONNEMENT D'UN SYSTÈME RADAR POUR VÉHICULE AUTOMOBILE ET SYSTÈME RADAR POUR VÉHICULE AUTOMOBILE

(30) Priorität: 14.09.2006 DE 102006043953
(43) Veröffentlichungstag der Anmeldung: 27.05.2009
(73) Patentinhaber: Valeo Schalter und Sensoren GmbH, 74321 Bietigheim-Bissingen (DE)
(72) Erfinder: HABERLAND, Udo, 71088 Holzgerlingen (DE)
(86) Internationale Anmeldenummer: PCT/EP2007/007214
(87) Internationale Veröffentlichungsnummer: WO 2008/031486

(56) Entgegenhaltungen:
- EP-A- 0 936 471
- EP-A- 1 679 525
- WO-A-2004/053523
- WO-A-2006/035019
- DE-A1- 3 844 340
- DE-B3- 10 349 755
- US-B1- 6 674 394

## Beschreibung

Die Erfindung betrifft ein Verfahren zur Parklückenvermessung mit einem Kraftfahrzeug-Radarsystem, das einen Multi-Beam-Radarsensor aufweist, dessen Radarkeule sequentiell in verschiedene Hauptstrahlrichtungen gerichtet wird.

Die Erfindung betrifft ferner ein Kraftfahrzeug-Radarsystem nach dem Oberbegriff des Anspruchs 10, also insbesondere ein zur Durchführung des Verfahrens und/oder zur Steuerung des Ablaufs des Verfahrens eingerichtetes Radarsystem.

Ein solches Verfahren und ein solches Radarsystem ist jeweils aus der DE 38 44 340 A1 bekannt. Nach dieser Schrift sollen am Kraftfahrzeug angebrachte Infrarot-, Ultraschall- oder Mikrowellen-Sensoren die geometrische Lage der Parklücke in Bezug auf das Kraftfahrzeug vermessen. Nach einer Draufsicht weist das Kraftfahrzeug vier Sensoren auf, von denen jeweils einer an einer äußeren Ecke des Kraftfahrzeugs angeordnet ist.

Ein Mikrowellen-Sensor besteht nach der DE 38 44 340 aus einem 100 GHz-Sender und Empfänger und einer monolithisch integrierten phasengesteuerten Gruppenantenne. Der Sender gibt 80 ns Pulse mit einer Wiederholfrequenz von 10 KHz auf die Antenne, die ihre Strahlkeule periodisch mit einer Periodendauer von 1/100 s über einen bestimmten Winkelbereich schwenkt.

Der bestimmte Winkelbereich liegt zum größten Teil vor oder hinter dem Kraftfahrzeug, je nachdem ob ein vorn oder hinten angeordneter Sensor betrachtet wird.

Von einem Hindernis reflektierte Signale werden hinsichtlich der zugehörigen Keulenrichtung und Zeitverzögerung ausgewertet, um die in dem Winkelbereich eines Sensors liegende Geometrie der Parklücke zu bestimmen. Die Information der anderen Sensoren liefert das Gesamtbild der Parklücke.

Aus der DE 10 2005 007 917 A1 ist ferner ein Multi-Beam-Radarsensor bekannt, der Teilbereiche eines vor einem Kraftfahrzeug liegenden Erfassungsbereichs sequentiell abtastet, indem eine Radarkeule nach dem "phased array"-Prinzip in verschiedene Raumrichtungen geschwenkt wird. Diese Schrift erläutert auch eine bei der Auswertung von Radarechos benutzte Phasendifferenzmethode, so dass diese, wie auch das elektronische Schwenken von Radarkeulen nach dem "phased array"-Prinzip, als bekannt vorausgesetzt werden kann.

Aus der WO2004/053523A1 ist ein Multi-Beam-Radarsensor bekannt, der eine Winkelortung anhand des Phasenunterschieds zwischen Empfangsantennen bestimmt.

Aus der EP0936471A2 ist ein Multi-Beam-Radarsensor bekannt, der Parklücken detektiert.

Vor diesem Hintergrund besteht die Aufgabe der Erfindung in der Angabe eines Verfahrens und eines Radarsystems, das eine Vermessung von Parklücken mit einer reduzierten Zahl von Sensoren erlaubt.

Diese Aufgabe wird bei einem Verfahren der eingangs genannten Art dadurch gelöst, dass wenigstens eine der Hauptstrahlrichtungen schräg nach vorn und wenigstens eine der Hauptstrahlrichtungen schräg nach hinten gerichtet ist, so dass dabei ein Erfassungsbereich abgedeckt wird, der sich vollständig neben einer Längsseite des Kraftfahrzeuges erstreckt, und dass eine Ausdehnung einer Parklücke in Längsrichtung des Kraftfahrzeuges beim Vorbeifahren an der Parklücke aus Radarechos verschiedener Radarkeulen bestimmt wird. Ferner wird diese Aufgabe bei einem Radarsystem der eingangs genannten Art durch die kennzeichnenden Merkmale des Anspruchs 9 gelöst.

Dabei wird unter einer schräg nach vorn gerichteten Hauptstrahlrichtung eine Richtung verstanden, deren nach vorn zeigende Richtungskomponente größer ist als ihre dazu senkrechte, zur Seite weisende Richtungskomponente. Mit den notwendigen Änderungen gilt für die schräg nach hinten weisende Hauptstrahlrichtung das Gleiche.

Als erwünschte Folge ergeben sich bei einer parallel zur Ausdehnung der Parklücke erfolgenden Vorbeifahrt an der Parklücke dominante Reflexionen an den Flanken der Parklücke, die eine zuverlässige Vermessung der Länge der Parklücke erlauben. Dies gilt insbesondere dann, wenn die Parklücke durch andere Kraftfahrzeuge begrenzt wird, deren Bug und Heck jeweils deutliche Reflexionen erzeugt.

Ferner entsprechen diese Ausrichtungen der Hauptstrahlrichtung weitgehend den Ausrichtungen, wie sie bei Radarsensoren für Funktionen zur Totwinkelüberwachung und/oder Spurwechselassistenz benutzt werden. Insofern ergibt sich der Vorteil der Möglichkeit einer Mehrfachnutzung eines Radarsensors für die genannten Funktionen. Ist das Kraftfahrzeug bereits mit einem solchen Radarsensor zur Totwinkelüberwachung oder Spurwechselassistenz ausgestattet, lässt sich die Erfindung ohne Mehrkosten für weitere Sensoren realisieren. Die Erfindung eignet sich daher insbesondere für eine Vermessung von Parklücken, die parallel zur Fahrtrichtung des Kraftfahrzeugs liegen.

In einer bevorzugten Ausgestaltung besitzt der Erfassungsbereich einen Öffnungswinkel zwischen 130° und 170°. Dieser Bereich schließt Werte mit ein, wie sie bei einem zur Totwinkelüberwachung von der Anmelderin angebotenen Radarsensor realisiert sind, so dass sich auch hier der Vorteil einer Mehrfachnutzung ergibt. Es hat sich ferner gezeigt, dass bei diesem Öffnungswinkel und einer üblichen Entfernung zwischen dem Fahrzeug, das an der Parklücke vorbeifährt (z.B. 0,5 bis 2m), und Fahrzeugen, die die Parklücke begrenzen, deutliche Reflexionen an den Flanken der Parklücke auftreten, die eine zuverlässige Vermessung der Längsausdehnung erlauben. Bei einem Öffnungswinkel aus diesem Bereich und einem lateralen Abstand zwischen dem fahrenden Fahrzeug und dem stehenden Fahrzeug ergeben sich zum Beispiel deutliche Reflexionen von Nummernschildern oder Stoßfängern der parkenden Fahrzeuge.

Eine einzelne Radarkeule besitzt zum Beispiel einen Öffnungswinkel von 30°, der sich näherungsweise als Quotient aus dem Öffnungswinkel des Erfassungsbereichs im Zähler und der Zahl der Hauptstrahlrichtungen oder Radarkeulen im Nenner ergibt. Beim Vorbeifahren in einem üblichen Abstand tritt in der Regel immer eine dominante Rück-Reflexion an einer Stelle eines geparkten Fahrzeugs auf, während an anderen Stellen reflektiertes Licht in andere Richtungen gestreut wird und daher vom Empfänger des Radarsystems nicht registriert wird. Ein dominant reflektierendes Objekt kann eine Kante, ein Außenspiegel, ein Nummernschild, etc. des geparkten Fahrzeugs sein. Wegen ihrer dominanten Reflexion eignen sich solche Objekte besonders zur Bestimmung der Ausdehnung durch Messung ihrer Entfernung vom Radarsensor.

Dabei kann die Entfernung nach einem üblichen Verfahren wie einem FMCW-Verfahren oder durch Messung der Zeit zwischen Aussenden eines Pulses und Empfang eines reflektierten Signals bestimmt werden.

In einer Ausgestaltung wird dem Objekt die Winkellage der Hauptstrahlrichtung zugeordnet, bei der die dominante Reflexion auftritt. Dieses Verfahren zeichnet sich durch einen geringen Signalverarbeitungsaufwand aus. Seine Genauigkeit steigt mit zunehmender Zahl der Radarkeulen, mit denen der Erfassungsbereich abgedeckt wird.

Im Rahmen einer anderen Ausgestaltung ist vorgesehen, dass dem Objekt eine mit einer Phasendifferenzmethode bestimmte Winkellage zugeordnet wird. Dadurch wird eine wesentlich verbesserte Winkelauflösung erzielt, da auch verschiedene Winkellagen innerhalb einer Radarkeule unterschieden werden können. Der Nutzen dieser Ausgestaltung steigt mit abnehmender Zahl der Radarkeulen, die zur Abdeckung des Erfassungsbereiches benötigt werden. Bevorzugt werden 4 bis 13 Hauptstrahlrichtungen verwendet.

Eine bevorzugte Ausgestaltung zeichnet sich dadurch aus, dass das Kraftfahrzeug-Radarsystem in einem ersten Betriebsmodus zur Überwachung eines toten Winkels dient und die Bestimmung der Ausdehnung der Parklücke nach einer vom Fahrer ausgelösten Umschaltung in einen zweiten Betriebsmodus ausführt.

Diese Ausgestaltung erlaubt die Mehrfachnutzung eines Radarsensors mit für jeden Betriebsmodus optimierten Parametern.

Um in Europa zugelassen zu werden, ist es erforderlich, dass das Radarsystem mit erlaubten Frequenzen arbeitet. Erlaubt sind zum Beispiel Frequenzen aus einem Frequenzband zwischen 24 GHz und 24,25 GHz. Mit einem solchen Schmalband-Radarsystem, das FMCW- oder FSK-Modulationsverfahren für Entfernungsmessungen benutzt und dazu eine Verteilung von spektralen Komponenten reflektierter Strahlung zur Bestimmung der Position von Objekten auswertet, lässt sich eine Genauigkeit der Entfernungsmessung zwischen einem halben und einem ganzen Meter erreichen. Durch eine ergänzende Auswertung einer Phasenverschiebung zwischen demodulierten Signalen im Zeitbereich kann die Genauigkeit jedoch bis in den Zentimeterbereich hinein gesteigert werden.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Es zeigen, jeweils in schematischer Form:
- Fig. 1: Fig. 1 ein erstes Kraftfahrzeug mit einem erfindungsgemäßen Kraftfahrzeug-Radarsystem zur Parklückenvermessung;
- Fig. 2: eine Bestimmung der Ausdehnung einer Parklücke beim Vorbeifahren an einer Parklücke aus empfangenen Radarechos;
- Fig. 3: eine Ausgestaltung des Radarsystems;
- Fig. 4: ein Flussdiagramm als Ausführungsbeispiel eines erfindungsgemäßen Verfahrens; und
- Fig. 5: ein Modul aus der Fig. 4 mit weiteren Details.

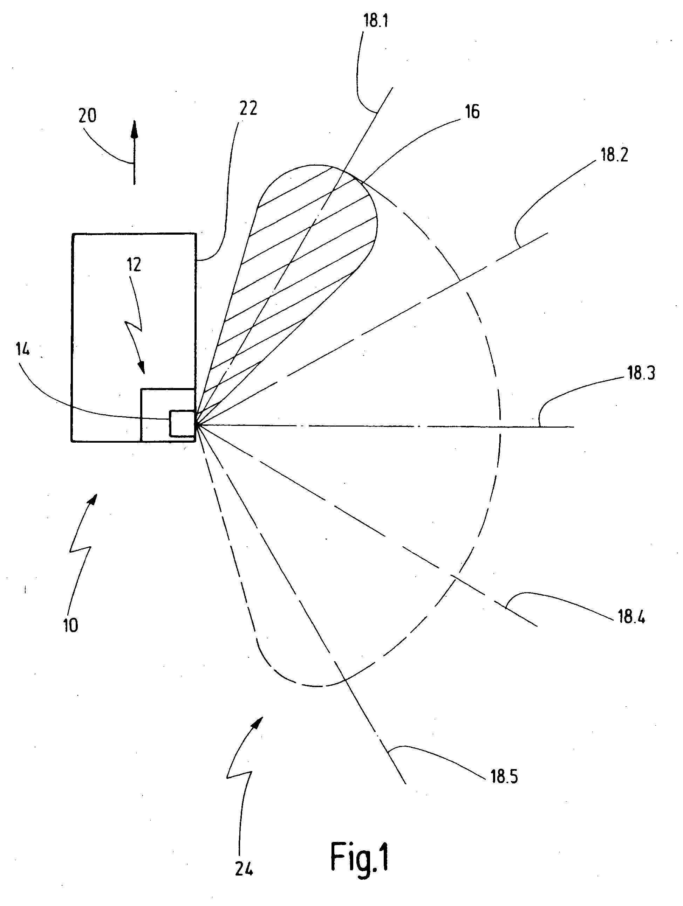

Im Einzelnen zeigt Fig. 1 ein erstes Kraftfahrzeug 10, das ein Kraftfahrzeug-Radarsystem 12 zur Parklückenvermessung aufweist. Das Radarsystem 12 weist insbesondere einen Multi-Beam-Radarsensor 14 auf, der dazu eingerichtet ist, eine Radarkeule 16 sequentiell in n = 5 verschiedene Hauptstrahlrichtungen 18.1, ..., 18.n zu richten. Das Radarsystem 12 ist dazu eingerichtet, wenigstens eine Radarkeule 16 schräg nach vorn und wenigstens eine Radarkeule schräg nach hinten zu richten. Der Pfeil 20 bezeichnet die normale Vorwärtsfahrrichtung des Kraftfahrzeugs 10. Eine Längsseite des Kraftfahrzeugs 10 ist mit der Ziffer 22 bezeichnet. In der Darstellung der Fig. 1 weist die Radarkeule 16 schräg nach vorn, wenn sie zu einem ersten Zeitpunkt längs der Hauptstrahlrichtung 18.1 ausgerichtet ist. Bei einer Ausrichtung längs der Hauptstrahlrichtung 18.n weist sie entsprechend schräg nach hinten.

Durch sequentielles Schwenken der Radarkeule 16 in die verschiedenen Hauptstrahlrichtungen 18.1, ..., 18.n wird ein Erfassungsbereich 24 abgedeckt, der sich neben der Längsseite 22 des Kraftfahrzeuges 10 erstreckt. Der Erfassungsbereich 24 besitzt in einer bevorzugten Ausgestaltung einen Öffnungswinkel zwischen 130° und 170° und wird durch Radarkeulen 16 mit einer Zahl n von Hauptstrahlrichtungen abgetastet, die zwischen 4 und 13 (4 kleiner oder gleich n kleiner oder gleich 13) liegt.

Der Radarsensor 14 besitzt typischerweise Abmessungen in der Größenordung weniger Zentimeter und wird bevorzugt hinter einem Kunststoffstoßfänger des Kraftfahrzeugs 10 seitlich vorn oder, wie in der Fig. 1, seitlich hinten, eingebaut. Dabei benutzt der Radarsensor 14 entweder dieselben Antennenstrukturen, vorzugsweise patch-Antennen, zum Senden von Radarsignalen und Empfangen reflektierter Radarsignale (Radarechos), oder zumindest benachbart im Bauvolumen des Sensors angeordnete getrennte Sende-und Empfangsstrukturen.

Reflektierte Radarstrahlung, die in andere Richtungen als die des Radarsensors 14 reflektiert wird, erzeugt daher kein Empfangssignal im Radarsystem 12. Die vom Radarsensor 14 verwendete Radarstrahlung besitzt zum Beispiel Frequenzen aus dem ISM-Frequenzband zwischen 24 GHz und 24,25 GHz. Je nachdem, welche gesetzlichen Bestimmungen zu beachten sind, kann die Erfindung auch unter Verwendung anderer Frequenzen und Frequenzbandbreiten realisiert werden.

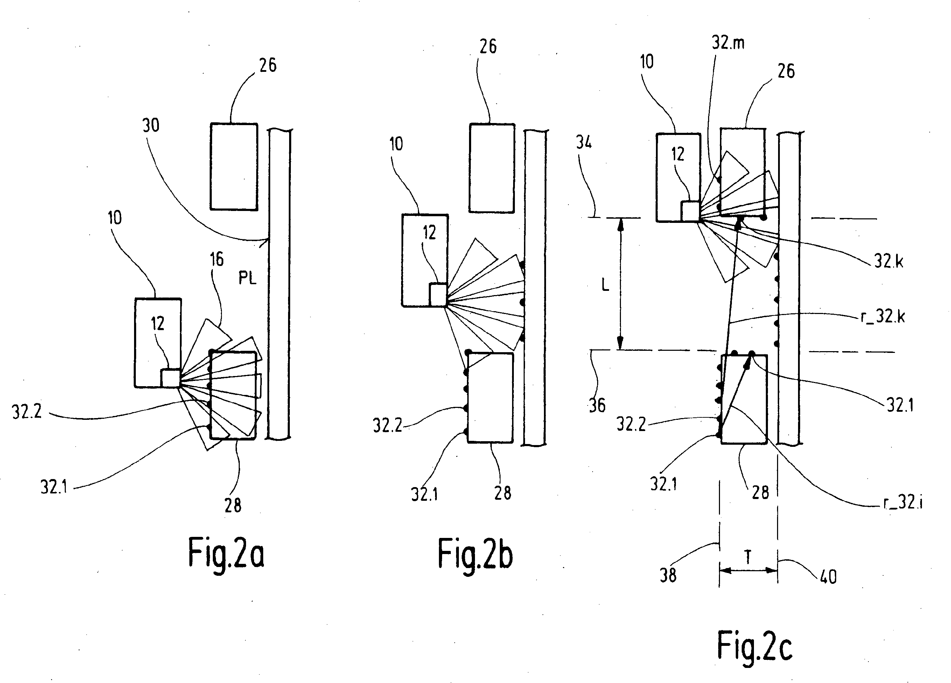

Fig. 2 zeigt schematisch, wie das Radarsystem 12 eine Ausdehnung einer Parklücke PL in Längsrichtung 22 des Kraftfahrzeugs 10 beim Vorbeifahren an der Parklücke PL aus empfangenen Radarechos bestimmt. Die Parklücke PL wird von parkenden Fahrzeugen 26 und 28 sowie einer Bordsteinkante 30 begrenzt. Beim Vorbeifahren an der Parklücke PL wird der Radarsensor 14 im Wesentlichen parallel an der Parklücke PL vorbeigeführt und tastet dabei die Konturen der Parklücke PL, also die Konturen der Fahrzeuge 26 und 28 sowie die Kontur der Bordsteinkante 30 (oder einer anderen Begrenzung der Parklücke PL) mit mehreren Radarkeulen 16 wiederholt ab.

Bei schrägem Auftreffen der Radarsignale auf die reflektierenden Objekte wird zwar ein Teil der auftreffenden Energie vom Radarsensor 14 weggestreut, erfahrungsgemäß wird aber in der Mehrzahl der Fälle wenigstens ein Objekt getroffen, das eine dominante Reflexion erzeugt, die eine Bestimmung der Position des Objektes relativ zu dem Radarsensor 14 erlaubt. Solche Objekte sind zum Beispiel Karosseriekanten, Außenspiegel, Nummerschilder, Flächen, die Vertiefungen in der Karosserie begrenzen, etc.

Zur Bestimmung der Ausdehnung der Parklücke bestimmt das Radarsystem 12 die radiale Entfernung und Winkellage von Objekten mit dominanter Reflexion relativ zum Radarsensor 14.

Dabei wird die Entfernung in einer Ausgestaltung nach einem FMCW-Verfahren (FMCW = frequency modulated continuos wave) oder einem anderen bekannten Verfahren zur Entfernungsmessung ermittelt.

Für die Ermittlung der Winkellage sieht eine Ausgestaltung vor, dass dem Objekt die Winkellage der Hauptstrahlrichtung zugeordnet wird, bei der die dominante Reflexion auftritt. Diese Hauptstahlrichtung ist im Radarsystem 12 bekannt. Bei der Verwendung von Frequenzen aus dem ISM-Band bei 24 GHz ist die minimale Keulenbreite und damit die Genauigkeit der Winkelmessung auf Werte in der Größenordnung von 20° bestimmt. Wegen der geringen Entfernungen, die bei der Parklückenvermessung auftreten, ist eine solche vergleichsweise grobe Winkelmessung in der Regel ausreichend. Eine verbesserte Genauigkeit wird in einer Ausgestaltung dadurch erzielt, dass das Radarsystem 12 die Winkellage dominant reflektierender Objekte nach einer Phasendifferenzmethode bestimmt.

Ort und Winkellage jedes detektierten dominant reflektierenden Objektes ergeben zusammen mit dem Ort des Radarsensors 14, der sich als geschwindigkeits- und zeitabhängige Verschiebung relativ zu einem am Beginn der Vermessung willkürlich gewählten Ausgangspunkt 32.1 ergibt, weitere Punkte 32.2, ..., 32.m, deren Ortsvektoren auf der Begrenzung der Parklücke PL liegen. Die Fig. 2 zeigt die Nachbildung der Parklücke PL für drei in den Figuren 2a, 2b und 2c dargestellte Positionen des vorbeifahrenden Kraftfahrzeugs 10.

Bildet man die Lage der Punkte 32.2 bis 32.m in dem ersten Quadranten eines x,y-Koordinatensystems mit dem Punkt 32.1 als Koordinatenursprung ab, so ergibt sich die Ausdehnung der Parklücke PL in Längsrichtung des vorbeifahrenden Kraftfahrzeugs 10 in einer Ausgestaltung als Differenz der Vektoren r_32.i, r_32.k der Punkte 32.i und 32.k, die sich dadurch auszeichnen, dass sie durch Reflexionen an Vorderseiten und Rückseiten der Fahrzeuge 28 und 26 erzeugt worden sind, die die Parklücke PL begrenzen.

Andere Ausgestaltungen sehen eine Erkennung von Häufungen von Radarechos längs Geraden vor, bilden Regressionsgeraden 34, 36 oder 34, 36, 38, 40, und bestimmen die Abmessungen L (Länge) oder L und T (Tiefe) als Abstände der Regressionsgeraden 34 und 36, oder 34 und 36 sowie 38 und 40.

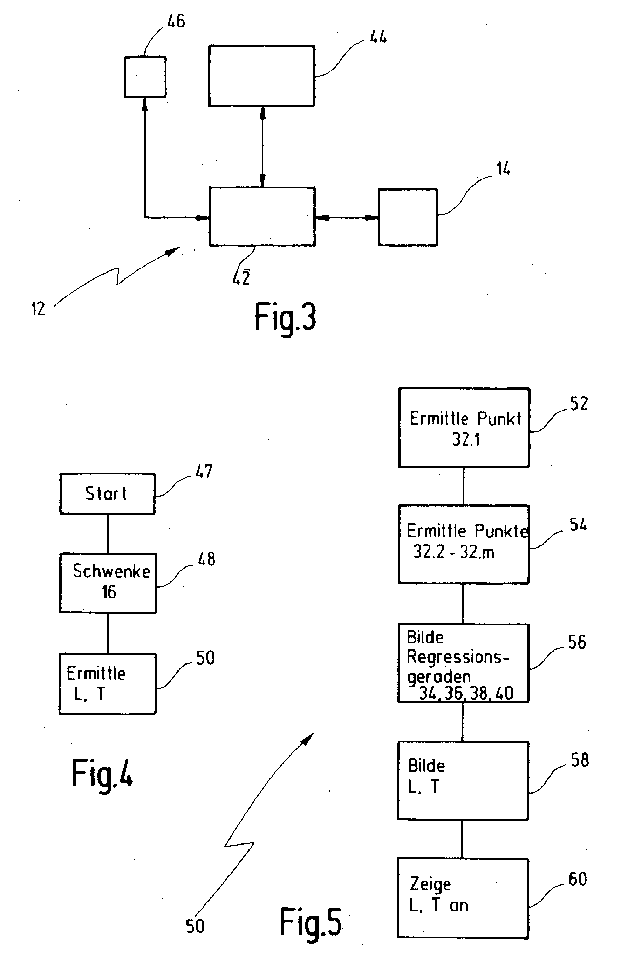

Fig. 3 zeigt eine Ausgestaltung des Radarsystems 12 mit dem Radarsensor 14, einer Auswerteeinheit 42, einer Anzeige 44 und einer Eingabe 46. Dabei können einzelne dieser Komponenten 14, 42, 44 und 46 auch zu einer baulichen Einheit zusammengefasst sein. Dies gilt insbesondere für den Radarsensor 14 und die Auswerteeinheit 42, aber auch für die Anzeige 44 und Eingabe 46.

Bei baulicher Trennung sind die Komponenten 14, 42, 44, 46 in einer Ausgestaltung über ein Bussystem oder ein anderes, Signale übertragendes System, miteinander verbunden. Die Auswerteeinheit 42 dient zu der beschriebenen Ermittlung der Ausdehnung der Parklücke PL aus empfangenen Radarechos. Die Anzeige 44 dient zur Anzeige der Ausdehnung in Form von Zahlenwerten oder einer grafischen Veranschaulichung der Ausdehnung anhand einer Vogelperspektive, die das eigene Fahrzeug 10 mit seinen Abmessungen in Relation zu den ermittelten Abmessungen der Parklücke PL darstellt. Dafür wird in einer Ausgestaltung das Display eines vorhandenen Infotainmentsystems benutzt.

Die Eingabe 46 dient zur Umschaltung zwischen Betriebsmodi des Radarsensors 14. In einer Ausgestaltung dient das Radarsystem 12 in einem ersten Betriebsmodus zur Überwachung eines toten Winkels und führt die Bestimmung der Ausdehnung der Parklücke PL nach einer vom Fahrer ausgelösten Umschaltung in einen zweiten Betriebsmodus aus. In beiden Betriebsmodi wird der Radarsensor 14 dann mit Betriebsmodusindividuell optimierten Parametern betrieben.

So ist es für die Überwachung eines toten Winkels bei höheren Geschwindigkeiten wichtig, den Bereich des toten Winkels möglichst oft abzutasten, während eine genaue Winkelmessung eher unwichtiger ist. Die Information für den Fahrer, die zum Beispiel durch Aktivieren eines Symbols im Rückspiegel übermittelt wird, besteht in der Warnung vor einem Objekt in dem toten Winkel. Die genaue Winkelinformation ist nicht erforderlich. Bei der Parklückenvermessung wird dagegen in der Regel die Geschwindigkeit geringer sein und es kommt verstärkt auf die Genauigkeit von Entfernungs- und Winkelmessungen an. Insgesamt ist das Radarsystem 12 dazu eingerichtet, eines der in dieser Anmeldung beschriebenen Verfahren auszuführen.

Fig. 4 zeigt ein Flussdiagramm als Ausführungsbeispiel eines erfindungsgemäßen Verfahrens. Danach wird in einem ersten Modul 48 die Radarkeule 16 wiederholt sequentiell in die beschriebenen, verschiedenen Hauptstrahlrichtungen 18.1, ..., 18.n gerichtet, und in einem zweiten Modul 50 wird die beschriebene Ermittlung der Ausdehnung L der Parklücke PL in Längsrichtung 20 des Kraftfahrzeuges 10 beim Vorbeifahren an der Parklücke PL aus Radarechos verschiedener Radarkeulen 16 vorgenommen. Es versteht sich, dass die beiden Module 48, 50 nicht hintereinander sondern auch zeitlich parallel abgearbeitet werden können. Dabei wird das Programm in einem Schritt 47 gestartet, wenn der Fahrer dies über die Eingabe 46 anfordert.

Nach dem detaillierteren Flussdiagramm der Fig. 5 umfasst das zweite Modul 50 in einer Ausgestaltung einen Schritt 52 zur Ermittlung des Bezugspunktes 32.1, einen Schritt 54 zur Ermittlung der weiteren Punkte 32.2 bis 32.m, einen Schritt 56 der Bildung der Regressionsgeraden 34, 36 oder 34, 36, und 38, 40, einen Schritt 58 zur Bildung der Abmessungen L oder L und T aus den gebildeten Regressionsgeraden 34, 36 oder 34, 36 und 38, 40, und einen Schritt 60 der Anzeige der Ausdehnung L oder L und T.

## Patentansprüche

1. Verfahren zur Parklückenvermessung mit einem Kraftfahrzeug-Radarsystem (12), das einen Multi-Beam Radarsensor (14) aufweist, dessen Radarkeule (16) sequentiell in verschiedene Hauptstrahlrichtungen (18.1, 18.2, ..., 18.n) gerichtet wird, wobei dass wenigstens eine der Hauptstrahlrichtungen (18.1, 18.2, ..., 18.n) schräg nach vorn und wenigstens eine der Hauptstrahlrichtungen (18.1, 18.2, ..., 18.n) schräg nach hinten gerichtet ist, so dass dabei ein Erfassungsbereich (24) abgedeckt wird, der sich vollständig neben einer Längsseite (22) des Kraftfahrzeugs (10) erstreckt, **dadurch gekennzeichnet, dass** eine Ausdehnung (L) einer Parklücke (PL) in Längsrichtung (20) des Kraftfahrzeugs (10) beim Vorbeifahren an der Parklücke (PL) durch Bestimmung der radialen Entfernung und Winkellage von Objekten mit dominanter Reflexion relativ zum Radarsensor (14) aus Radarechos verschiedener Radarkeulen (16) bestimmt wird, wobei Ort und Winkellage jedes detektierten dominant reflektierenden Objektes zusammen mit dem Ort des Radarsensors (14) weitere Punkte (32.2, ..., 32.m) ergeben, deren Ortsvektoren auf der Begrenzung der Parklücke (PL) liegen, wobei der Ort des Radarsensors (14) sich als geschwindigkeits- und zeitabhängige Verschiebung relativ zu einem am Beginn der Vermessung willkürlich gewählten Ausgangspunkt (32.1)ergibt.

2. Verfahren nach Anspruch 1, **dadurch gekennzeichnet, dass** der Erfassungsbereich (24) einen Öffnungswinkel zwischen 130[deg.] und 170[deg.] besitzt.

3. Verfahren nach Anspruch 2, **dadurch gekennzeichnet, dass** die Entfernung nach einem FMCW-Verfahren bestimmt wird.

4. Verfahren nach einem der vorhergehenden Ansprüche, **dadurch gekennzeichnet, dass** dem Objekt die Winkellage der Hauptstrahlrichtung ((18.1, 18.2, ..., 18.n) zugeordnet wird, bei der die dominante Reflexion auftritt.

5. Verfahren nach einem der Ansprüche 1 bis 4, **dadurch gekennzeichnet, dass** dem Objekt eine mit einer Phasendifferenzmethode bestimmte Winkellage zugeordnet wird.

6. Verfahren nach einem der vorhergehenden Ansprüche, **dadurch gekennzeichnet**, das n=4 bis n=13 Hauptstrahlrichtungen (18.1, 18.2, ..., 18.n) verwendet werden.

7. Verfahren nach einem der vorhergehenden Ansprüche, **dadurch gekennzeichnet, dass** das Kraftfahrzeug-Radarsystem (12) in einem ersten Betriebsmodus zur Überwachung eines toten Winkels dient und die Bestimmung der Ausdehnung (L) der Parklücke (PL) nach einer vom Fahrer ausgelösten Umschaltung in einen zweiten Betriebsmodus ausführt.

8. Verfahren nach einem der vorhergehenden Ansprüche, **dadurch gekennzeichnet**, das das Radarsystem (12) mit Frequenzen aus einem Frequenzband zwischen 24 GHz und 24,25 GHz arbeitet.

9. Kraftfahrzeug-Radarsystem (12) zur Parklückenvermessung, das einen Multi-Beam-Radarsensor (14) aufweist und dazu eingerichtet ist, eine Radarkeule (16) sequentiell in verschiedene Hauptstrahlrichtungen (18.1, 18.2, ..., 18.n) zu richten, wobei dass das Radarsystem (12) dazu eingerichtet ist, wenigstens eine Radarkeule (16) schräg nach vorn und wenigstens eine Radarkeule (16) schräg nach hinten zu richten und dabei einen Erfassungsbereich (24) abzudecken, der sich vollständig neben einer Längsseite (22) des Kraftfahrzeugs (10) erstreckt, **dadurch gekennzeichnet dass** das Radarsystem (14) dazu eingerichtet ist, eine Ausdehnung (L) einer Parklücke (PL) in Längsrichtung (20) des Kraftfahrzeugs (10) beim Vorbeifahren an der Parklücke (PL) durch Bestimmung der radialen Entfernung und Winkellage von Objekten mit dominanter Reflexion relativ zum Radarsensor (14) aus empfangenen Radarechos verschiedener Radarkeulen zu bestimmen,
wobei Ort und Winkellage jedes detektierten dominant reflektierenden Objektes zusammen mit dem Ort des Radarsensors (14) weitere Punkte (32.2, ..., 32.m) ergeben, deren Ortsvektoren auf der Begrenzung der Parklücke (PL) liegen, wobei der Ort des Radarsensors (14) sich als geschwindigkeits- und zeitabhängige Verschiebung relativ zu einem am Beginn der Vermessung willkürlich gewählten Ausgangspunkt (32.1) ergibt.

10. Radarsystem (12) nach Anspruch 9, **dadurch gekennzeichnet, dass** das Radarsystem (12) dazu eingerichtet ist, ein Verfahren nach einem der Ansprüche 2 bis 8 durchzuführen.

## Claims

1. Method for parking space measurement comprising a motor vehicle radar system (12) which has a multi-beam radar sensor (14) whose radar lobe (16) is directed sequentially in different main beam directions (18.1, 18.2, ..., 18.n), at least one of the main beam directions (18.1, 18.2, ..., 18.n) being directed obliquely forward, and at least one of the main beam directions (18.1, 18.2, ..., 18.n) being directed obliquely rearward so as to cover a detection region (24) which extends completely next to a longitudinal side (22) of the motor vehicle (10), **characterized in that** an extent (L) of a parking space (PL) in the longitudinal direction (20) of the motor vehicle (10) is determined as the parking space (PL) is being driven past by determining the radial distance and angular position of objects with dominant reflection relative to the radar sensor (14) from radar echoes of different radar lobes (16), the location and angular position of each detected dominantly reflecting object producing, together with the location of the radar sensor (14), further points (32.2, ..., 32.m) whose location vectors lie on the boundary of the parking space (PL), the location of the radar sensor (14) being yielded as a speed-dependent and time-dependent displacement relative to an initial point (32.1) arbitrarily selected at the beginning of the measurement.

2. Method according to Claim 1, **characterized in that** the detection region (24) has an aperture angle of between 130[degrees] and 170[degrees].

3. Method according to Claim 2, **characterized in that** the distance is determined by using an FMCW method.

4. Method according to one of the preceding claims, **characterized in that** the object is assigned the angular position of the main beam direction (18.1, 18.2, ..., 18.n) in the case of which the dominant reflection occurs.

5. Method according to one of Claims 1 to 4, **characterized in that** the object is assigned an angular position determined using a phase difference method.

6. Method according to one of the preceding claims, **characterized in that** n=4 to n=13 main beam directions (18.1, 18.2, ..., 18.n) are used.

7. Method according to one of the preceding claims, **characterized in that** the motor vehicle radar system (12) serves for monitoring a dead angle in a first operating mode and carries out the determination of the extent (L) of the parking space (PL) after the driver has initiated a switch-over to a second operating mode.

8. Method according to one of the preceding claims, **characterized in that** the radar system (12) operates with frequencies from a frequency band between 24 GHz and 24.25 GHz.

9. Motor vehicle radar system (12) for parking space measurement which has a multi-beam radar sensor (14) and is set up to direct a radar lobe (16) sequentially in different main beam directions (18.1, 18.2, ..., 18.n), the radar system (12) being set up to direct at least one radar lobe (16) obliquely forward and at least one radar lobe (16) obliquely rearward and thereby cover a detection region (24) which extends completely next to a longitudinal side (22) of the motor vehicle (10), **characterized in that** the radar system (14) is set up to determine an extent (L) of a parking space (PL) in a longitudinal direction (20) of the motor vehicle (10) as the parking space (PL) is being driven past by determining the radial distance and angular position of objects with dominant reflection relative to the radar sensor (14) from received radar echoes of different radar lobes, the location and angular position of each detected dominantly reflecting object producing, together with the location of the radar sensor (14), further points (32.2, ..., 32.m) whose location vectors lie on the boundary of the parking space (PL), the location of the radar sensor (14) being yielded as a speed-dependent and time-dependent displacement relative to an initial point (32.1) arbitrarily selected at the beginning of the measurement.

10. Radar system (12) according to Claim 9, **characterized in that** the radar system (12) is set up to carry out a method according to one of Claims 2 to 8.

## Revendications

1. Procédé de mesure d'un emplacement de stationnement à l'aide d'un système radar (12) pour véhicule automobile, qui présente un capteur radar (14) multifaisceaux dont les lobes radar (16) sont orientés successivement dans différentes directions principales de rayonnement (18.1, 18.2, ..., 18.n),
au moins une des directions principales de rayonnement (18.1, 18.2, .... 18.n) étant orientée obliquement vers l'avant et au moins une des directions principales de rayonnement (18.1, 18.2, ..., 18.n) étant orientée obliquement vers l'arrière de manière à couvrir une zone de saisie (24) qui s'étend entièrement à côté d'un côté longitudinal (22) du véhicule automobile (10),
**caractérisé en ce que**
l'étendue (L) d'un emplacement de stationnement (PL) dans la direction longitudinale (20) du véhicule automobile (10) est déterminée lors du déplacement le long de l'emplacement de stationnement (PL) en déterminant à partir d'écho radar de différents lobes radar (16) la distance radiale et la position angulaire d'objets qui présentent une réflexion dominante vis-à-vis du capteur radar (14),
**en ce que** la position et la position angulaire de chaque objet à réflexion dominante détecté fournit avec l'emplacement du détecteur radar (14) d'autres points (32.2, ..., 32.m) dont les vecteurs de position sont situés sur la frontière de l'emplacement de stationnement (PL) et
**en ce que** la position du capteur radar (14) est déduite du décalage en vitesse et en temps par rapport à un point initial (32.1) sélectionné arbitrairement au début de la mesure.

2. Procédé selon la revendication 1, **caractérisé en ce que** la zone de saisie (24) possède un angle d'ouverture compris entre 130[deg.] et 170 [deg.].

3. Procédé selon la revendication 2, **caractérisé en ce que** la distance est déterminée par un procédé FMCW.

4. Procédé selon l'une des revendications précédentes, **caractérisé en ce que** la position angulaire de la direction principale de rayonnement (18.1, 18.2, ..., 18.n) qui correspond à la réflexion dominante est associée à l'objet.

5. Procédé selon l'une des revendications 1 à 4, **caractérisé en ce que** la position angulaire déterminée en appliquant une méthode de différence de phase est associée à l'objet.

6. Procédé selon l'une des revendications précédentes, **caractérisé en ce qu'**il utilise n = 4 à n = 13 directions principales de rayonnement (18.1, 18.2, ..., 18.n).

7. Procédé selon l'une des revendications précédentes, **caractérisé en ce que** le système radar (12) du véhicule automobile sert dans un premier mode de fonctionnement à surveiller un angle mort et **en ce qu'**il exécute la détermination de l'étendue (L) de l'emplacement de stationnement (PL) après que le conducteur a déclenché une commutation dans un deuxième mode de fonctionnement.

8. Procédé selon l'une des revendications précédentes, **caractérisé en ce que** le système radar (12) travaille à des fréquences situées dans une bande de fréquences comprise entre 24 GHz et 24,25 GHz.

9. Système radar (12) pour véhicule automobile, servant à mesurer un emplacement de stationnement, présentant un capteur radar (14) multifaisceaux et conçu pour orienter un lobe radar (16) séquentiellement dans différentes directions principales de rayonnement (18.1, 18.2, .... 18.n),
le système radar (12) étant conçu pour orienter au moins un lobe radar (16) obliquement vers l'avant et au moins un lobe radar (16) obliquement vers l'arrière pour ainsi couvrir une zone de saisie (24) qui s'étend entièrement à côté d'un côté longitudinal (22) du véhicule automobile (10),
**caractérisé en ce que**
le système radar (14) est conçu pour déterminer l'étendue (L) d'un emplacement de stationnement (PL) dans la direction longitudinale (20) du véhicule automobile (10) pendant que le véhicule passe devant l'emplacement de stationnement (PL), en déterminant à partir des échos radar reçus de différents lobes radar la distance radiale et la position angulaire d'objets à réflexion dominante par rapport au capteur radar (14),
**en ce que** l'emplacement et la position angulaire de chaque objet détecté à réflexion dominante fournit avec l'emplacement du capteur radar (14) d'autres points (32.2, ..., 32.m) dont les vecteurs de position sont situés sur la frontière de l'emplacement de stationnement (PL) et
**en ce que** l'emplacement de capteur radar (14) est déduit du décalage en vitesse et en temps par rapport à un point initial (32.1) sélectionné arbitrairement au début de la mesure.

10. Système radar (12) selon la revendication 9, **caractérisé en ce que** le système radar (12) est conçu pour exécuter un procédé selon l'une des revendications 2 à 8.
